# EUROPÄISCHE PATENTANMELDUNG

(11) **EP 2 439 041 A1**
(43) Veröffentlichungstag der Anmeldung: **11.04.2012**
(21) Anmeldenummer: 10013405.5
(22) Anmeldetag: 07.10.2010
(51) Int. Cl.: B29C 45/14

(54) **Verfahren zur Kennzeichnung von Spritzgussteilen**

(71) Anmelder: ifw Manfred Otte GmbH, 4563 Micheldorf (AT)
(72) Erfinder: Demmel, Andreas, 4694 Ohlsdorf (AT); Mitteregger, Erich, 4563 Micheldorf (AT); Kastner, Friedrich, 4710 Grieskirchen (AT)
(74) Vertreter: Ofner, Clemens

(57) **Zusammenfassung**

Die Erfindung betrifft ein Verfahren zur Kennzeichnung von Spritzgussteilen, wie Rohren und Fittings, wobei ein im Wesentlichen schlauchförmiger Sleeve, aus einem Vlies, einer Folie oder einem Folienverbund mit den produkt- oder herstellungs- oder verwendungsrelevanten Daten, zumindest an mehreren Stellen oder kontinuierlich über die gesamte innere Oberfläche des schlauchförmigen Sleeves versehen wird, über den Spritzgusskern gezogen wird, anschließend die Spritzgussform geschlossen und der Spritzgussvorgang durchgeführt wird.

## Beschreibung

Die Erfindung betrifft ein Verfahren zur Kennzeichnung von Spritzgussteilen, insbesondere Rohre, Fittings und dergleichen, wobei die Kennzeichnung auch im eingebauten Zustand der Spritzgussteile erkennbar sein soll.

Derzeit werden Rohre, Fittings und dergleichen an der äußeren Oberfläche mit einer Kennzeichnung versehen, der unterschiedliche Daten, wie Hersteller, Nennweite, Material, etc. entnommen werden können.

Diese Kennzeichnung, erfolgt im Allgemeinen entweder durch Gravur, durch aufgeklebte Etiketten und dergleichen oder über einen Negativstempel der im Spritzgusswerkzeug eingesetzt ist. Dieser Stempel kann mit den entsprechenden Informationen graviert, geätzt, gefräst oder gelasert sein.

Bei Einbau der Rohre, Fittings und dergleichen ist diese Kennzeichnung dann vom umgebenden Substrat (Erdreich, Mauerwerk, Dämmung etc) verdeckt.

Die Kontrolle der Funktionsfähigkeit und Unversehrtheit der eingebauten Rohre und Fittings erfolgt insbesondere bei Versorgungsleitungen durch Befahrung mit Kameras oder Lesegeräten.

Es ist daher wünschenswert, nicht nur bei etwaigen Defekten, eine Möglichkeit der Identifizierung der eingebauten Rohre vorzusehen, ohne diese ausbauen zu müssen. Ferner soll die Kennzeichnung unabhängig von der Einbaulage der Rohre und Fittings jederzeit erkennbar sein

Aufgabe der Erfindung war es daher ein Verfahren bereitzustellen, das eine Kennzeichnung von Spritzgussteilen, wie Rohren oder Fittings und dergleichen ermöglicht, wobei diese Kennzeichnung im Wesentlichen kontinuierlich an der inneren Oberfläche der Rohre und Fittings vorgesehen ist.

Gegenstand der Erfindung ist daher ein Verfahren zur Kennzeichnung von Spritzgussteilen, wie Rohren und Fittings, dadurch gekennzeichnet, dass ein im wesentlichen schlauchförmiger Sleeve, aus einem Vlies, einer Folie oder einem Folienverbund mit den produkt- oder herstellungs- oder verwendungsrelevanten Daten, zumindest an mehreren Stellen oder kontinuierlich über die gesamte innere Oberfläche des schlauchförmigen Sleeves versehen wird, über den Spritzgusskern gezogen wird, anschließend die Spritzgussform geschlossen und der Spritzgussvorgang durchgeführt wird.

Unter Vlies werden insbesondere Endlosfaservliese, Stapelfaservliese und dergleichen, die gegebenenfalls vernadelt oder kalandriert sein können, oder Gewebe, Gelege oder Prepregs verstanden, die beschichtet sein können, beispielsweise mit einem Heißsiegellack, oder vorbehandelt sein können. Vorzugsweise bestehen solche Vliese aus Kunststoffen, wie PE, PP, PET, PA, PPS aber auch aus Naturfasern (wie Kenaf, Jute, Sisal, Kokos) oder aus mit Naturfasern versetzten Kunststoffen und dergleichen. Die Vliese können auch Metallfasern, Glasfaser oder Kohlefasern aufweisen.

Gegebenenfalls können Vliese auch zur lokalen Erhöhung der Festigkeit an kritischen Stellen dienen.

Als Folien kommen insbesondere Kunststofffolien in Frage, beispielsweise aus Polyimid, Polyolefinen, wie Polyethylen (HDPE, LDPE) oder Propylen, oder deren Copolymere, wie Polyethylenimid, PEEK, PEK, Polyester, Polystyrole, wie ABS, PPS, Polyamid, Polycarbonat, Polyvinylchlorid, Teflon, Polytetraflourethylen und dergleichen. Es können auch coextrudierte PP, PP/PE-Folien oder metallisierte Kunststofffolien verwendet werden.

Die Kunststofffolien weisen vorzugsweise eine Dicke von 5 - 2000 µm, bevorzugt 5 - 700 µm, besonders bevorzugt 10 - 50 µm auf.

Ferner können auch gegebenenfalls oberflächenbehandelte, mit Kunststoffen beschichtete oder kaschierte, oder lackierte Metallfolien, beispielsweise bevorzugt Al- oder Cu- Folien, aber auch Sn-, Ni-, Fe- oder Edelstahlfolien mit einer Dicke von 5 µm ― 2mm, vorzugsweise 10 bis 100 µm dienen.

Ferner können als Sleeves auch Papier oder Verbunde mit Papier, beispielsweise Verbunde von Papier mit Kunststoffen mit einem Flächengewicht von 20 - 800 g/m², vorzugsweise 40 - 400 g/m² verwendet werden.

Die Sleeves können eine definierte Elastizität aufweisen. Dadurch können sie auf einfache Weise über den Spritzgusskern gezogen werden und haben dort gleichzeitig über die aufgebaute Spannung einen sicheren Halt.

Bei Verwendung von nicht elastischen Sleeves kann dieser durch Nut oder Vakuum, eine releasefähige Schicht oder eine Klebeschicht, elektrostatisch, magnetisch oder dergleichen am Kern befestigt werden.

Der Sleeve kann in einer Ausführungsform über den gesamten Kern der Spritzgussform gezogen werden, aber auch nur in einem oder mehreren definierten Bereichen.

Der Sleeve wird mit produkt- herstellungs- und/oder verwendungsspezifischen Daten versehen.

Dabei wird bei Verwendung von definiert elastischen Sleeves darauf geachtet, dass die Information auch in bedingt gestreckten Zustand des Vlieses noch erkennbar sind.

Produktrelevante Informationen sind beispielsweise Informationen über den Hersteller, das Material, die Produktionscharge, das Datum der Herstellung und dergleichen.

Verwendungsrelevante Informationen sind beispielsweise Informationen über mechanische oder thermische Beständigkeiten, Oberflächen (Innen-Außenseite), Leitfähigkeit, Haptik, optimale Verarbeitungs- bzw. Installationstemperatur des Spritzgussteils und dergleichen.

Ferner können als verwendungsspezifische Informationen Indikatoren beispielsweise für eine Temperaturanzeige, Feuchtigkeitsanzeige, Anzeige von Gasaus- oder eintritt (Dichtigkeit) und dergleichen aufgebracht werden.

Gegebenenfalls können auch kundenspezifische Informationen, wie beispielsweise Auftragsdaten, Barcodes für die maschinenlesbare Erfassung des Spritzgussteils und dergleichen aufgebracht sein. Ferner können auf dem Sleeve Felder vorgesehen sein, die der Kunde selbst am fertigen Produkt bedrucken kann, beispielsweise mittels eines Inkjet-Druckers, eines Thermotransferdruckers oder mittels Laserbeschriftung.

In besonderen Fällen können auch Sicherheitselemente und/oder verarbeitungsrelevante Elemente aufgebracht sein, beispielsweise RFID-Transponder, Chips, optisch aktive Strukturen, elektrisch leitfähige Merkmale oder magnetische Merkmale, thermochrome oder photochrome Merkmale, fluoreszierende Merkmale und dergleichen. Diese Elemente können sowohl zum Nachweis der Herkunft oder zur Identifizierung des Spritzgussteils, als auch zur Erkennung verwendungs- und/oder verarbeitungsrelevanter Daten, wie Temperatur und dergleichen oder auch im Falle eines Transponders zum Orten der Produkte dienen.

Diese Schichten können sowohl partiell als auch vollflächig aufgebracht sein und miteinander kombiniert sein.

Insbesondere können Transponder Informationen für Elektrofusionsfittings übertragen, beispielsweise können Strom/Spannungskurven über die auf dem Sleeve vorhandenen Informationen auslesbar sein. Ferner können auf dem Vlies auch thermochrome Schichten aufgebracht sein, die als Schweißindikatoren dienen können.

Ferner kann das Sleeve auch elektrolumineszierende Beschichtungen aufweisen, wobei die Beschichtung unter Stromeinfluss zu leuchten beginnt. Es können aber auch beispielsweise bereits mit Indikatoren (beispielsweise temperatur-, feuchtigkeits- oder drucksensitiven Indikatoren) oder geprägten Strukturen versehene Sleeves vor der Einbringung in die Spritzgussform mittels eines Digitaldruckverfahrens mit individuellen Informationen versehen, also individualisiert werden, wobei hier jedes einzelne Spritzgussteil einer Charge mit unterscheidenden Informationen versehen werden kann.

Die kennzeichnenden Schichten können an der Oberfläche des Sleeves aufgebracht sein, bei Verbunden aber auch zwischen den Schichten des Verbundes. Sind die Schichten auf einer oder, bei transparenten Substraten gegebenenfalls auch auf beiden Oberflächen des Sleeves aufgebracht, ist auf die Beständigkeit zu achten, daher wird vorzugsweise eine bekannte Schutzschicht oder eine Schutzlackschicht aufgebracht, um die Oberfläche vor aggressiven Bestandteilen zu schützen.

Durch eine Befahrung der eingebauten Rohre bzw. Fittings mit einer Kamera oder speziellen Lesegeräten kann nun z.B.: der Hersteller, die Nennweite, der Winkel, das Material, die Norm, das Fittingprogramm, das Herstellungsdatum, usw. identifizierbar sein, und somit die Haftungsfrage bei Defekten erleichtern.

## Patentansprüche

1. Verfahren zur Kennzeichnung von Spritzgussteilen, wie Rohren und Fittings, **dadurch gekennzeichnet, dass** ein im Wesentlichen schlauchförmiger Sleeve, aus einem Vlies, einer Folie oder einem Folienverbund mit den produkt- oder herstellungs- oder verwendungsrelevanten Daten, zumindest an mehreren Stellen oder kontinuierlich über die gesamte innere Oberfläche des schlauchförmigen Sleeves versehen wird, über den Spritzgusskern gezogen wird, anschließend die Spritzgussform geschlossen und der Spritzgussvorgang durchgeführt wird.

2. Verfahren nach Anspruch 1, **dadurch gekennzeichnet, dass** der Sleeve eine definierte Elastizität aufweist.

3. Verfahren nach einem der Ansprüche 1 oder 2, **dadurch gekennzeichnet, dass** der Sleeve durch Eigenspannung, durch Anlegen von Vakuum, durch elektrostatische Kräfte, magnetische Kräfte mittels eine Klebeschicht oder einer releasefähigen Schicht, oder durch Erhitzen am Kern befestigt wird.

4. Verfahren nach einem der Ansprüche 1 bis 3, **dadurch gekennzeichnet, dass** der Sleeve aus einem Vlies aus Kunststoffen, wie PE, PP, PET, PA, PPS aber auch aus Naturfasern (wie Kenaf, Jute, Sisal, Kokos) oder aus mit Naturfasern oder Metallfasern, Glasfaser oder Kohlefasern versetzten Kunststoffen besteht.

5. Verfahren nach einem der Ansprüche 1 bis 3, **dadurch gekennzeichnet, dass** der Sleeve aus einer Folie aus Polyimid, Polyolefinen, wie Polyethylen (HDPE, LDPE) oder Propylen, oder deren Copolymere, wie Polyethylenimid, PEEK, PEK, Polyester, Polystyrole, wie ABS, PPS, Polyamid, Polycarbonat, Polyvinylchlorid, Teflon, Polytetraflourethylen, besteht.

6. Verfahren nach einem der Ansprüche 1 bis 3, **dadurch gekennzeichnet, dass** der Sleeve aus mit Kunststoffen beschichteten oder kaschierten, oder lackierten Metallfolien, aus Papier oder Verbunden mit Papier besteht.

7. Verfahren nach einem der Ansprüche 1 bis 6, **dadurch gekennzeichnet, dass** der Sleeve in einem oder mehreren Bereichen oder über den gesamten Kern gezogen wird.
